## Europäisches Patentamt
## European Patent Office
## Office européen des brevets

(19)

(11) Publication number: **0 022 096**
**B1**

(12) # EUROPEAN PATENT SPECIFICATION

(45) Date of publication of patent specification: **07.03.84**

(51) Int. Cl.³: **B 60 C 23/02** //G01P15/09

(21) Application number: **80850036.7**

(22) Date of filing: **25.03.80**

(54) Device for indicating air pressure in vehicle tires.

(30) Priority: **03.04.79 SE 7902946**

(43) Date of publication of application:
**07.01.81 Bulletin 81/1**

(45) Publication of the grant of the patent:
**07.03.84 Bulletin 84/10**

(84) Designated Contracting States:
**DE FR GB IT**

(56) References cited:
**FR - A - 2 183 615**
**US - A - 3 526 873**

(73) Proprietor: **Sinha, Brajnandan**
**1 Spovgränd**
**S-951 47 Lulea (SE)**

(72) Inventor: **Sinha, Brajnandan**
**1, Spongränd**
**S-951 47 Lulea (SE)**
Inventor: **Tiberg, Sven Erik**
**3, Kaptensvägen**
**S-950 10 Gammelstad (SE)**

(74) Representative: **Onn, Thorsten et al,**
**AB STOCKHOLMS PATENTBYRA Box 3129**
**S-103 62 Stockholm (SE)**

Courier Press, Leamington Spa, England.

EP 0 022 096 B1

Device for indicating air pressure in vehicle tires

This invention relates generally to a device for indicating unsatisfactory air-pressure in vehicle-tires by using transducing means, which are rigidly attached to a non-rotating portion of the respective hub assembly and affected continuously by changes in the tire properties caused by a change in the air-pressure of the tire of a running vehicle, which transducing means are connected to an electronic unit for releasing a warning signal when the air-pressure conditions pass a predetermined limit critical for the driving safety.

In particular, the invention refers to a device for indicating change of the pressure in vehicle tires, comprising transducers, which are located fixed on wheel suspension means, preferably adjacent the respective hub, and are continuously affected by the dynamic behaviour of the running wheel, and an electronic unit for releasing a warning signal when the dynamic properties of the wheel depending on its tire pressure pass a predetermined limit, wherein the transducers are accelerometers which with their outputs are connected to the electronic unit which transforms the primary signals received from the accelerometers and decreasing with dropping tire pressure to secondary signals expressing the vertical acceleration component valid for the respective tire at a certain frequency or frequency range.

Incorrect inflation pressure, as known, results in too small a contact surface of the tire with the roadway when the pressure is too high, and in poor stability of the tire when the pressure is too low. Especially in this latter case, the road holding ability is reduced. When the inflation pressure in both rear wheel tires is too low, the road holding ability at the rear of the vehicle deteriorates, especially with rear wheel drive, whereby the course stability of the vehicle is jeopardized, i.e. the vehicle wanders. However, when only one tire in a pair of tires has too low a pressure, the vehicle loses its stability in one direction, because the vehicle then inclines in the direction of said tire, and the other tire thereby is subjected to a reduced load. This case implies that the vehicle wheels point in different directions, which is much more dangerous than if there is too low but equal pressure in both tires.

The same also applies to the front wheel tires, which indicates itself by a substantial deterioration of the steering capacity of the vehicle.

As long as the vehicle is driven straight forward and is not exposed to any outside lateral forces (due to eddy-wind, rutted road, evasive actions etc.), the driver does not notice when the pressure in a tire is too low. However, when a firm road holding is really requried, for example when the vehicle is subjected to the aforesaid lateral forces, the driver unexpectedly is made aware of the low tire pressure. Various systems have been proposed to indicate too low a tire pressure and thereby to reduce the risk if accidents.

In one such conventional system, the tire valve is equipped with an indicating means, which signals too low a pressure by a red light. This system has not to an appreciable extent been used in practice, because it requires the driver to stop the vehicle and to read the indicating means of each wheel. Moreover, no warning for lack of stability is indicated in advance when leakages rapidly developing while driving give rise to rapid pressure drop.

A further system, which is of a more advanced and continuously monitoring nature, and which informs the driver while driving of decreasing air pressure, is disclosed in US—A—3 526 873. This system is of the kind referred to above in the introductory portion of this description. Said system has the characterizing feature, that the release of the indication is based on the amplitude of the tire vibrations, and the arrangement is such that the output signal of the transducing means increases with decreasing inflation pressure, i.e. indication is effected when the output signal amplitude exceeds a certain maximum value, which is set manually. This system has not been put to widespread use, especially because of its inherent uncertainty and groundless indication when the vehicle runs over marked bumps in the roadway.

Further, from FR—A—2 183 615 it is known *per se* to use an electronic circuit for transforming signal currents, emitted by an accelerometer in response to vibrations of a wheel tire induced by road irregularities, into voltage signals indicating the vertical acceleration component of the tire at the oscillation frequency thereof.

A safer as well as more sensitive indication than that obtianed by the arrangement according to US—A—3 526 873 is made possible by the invention, in that said secondary signals are compared either with each other or individually with a reference value, and the signals resulting from such comparison are passed via an integrator to a warning signal device, the arrangement being such that a warning signal is given when the time integral of the differences falls below a preset value.

In this connection, two ways can be chosen between, viz. (1) to measure the air pressure individually for each wheel, and (2) to measure relatively the air pressures of two wheels on the same axle or each on a different axle.

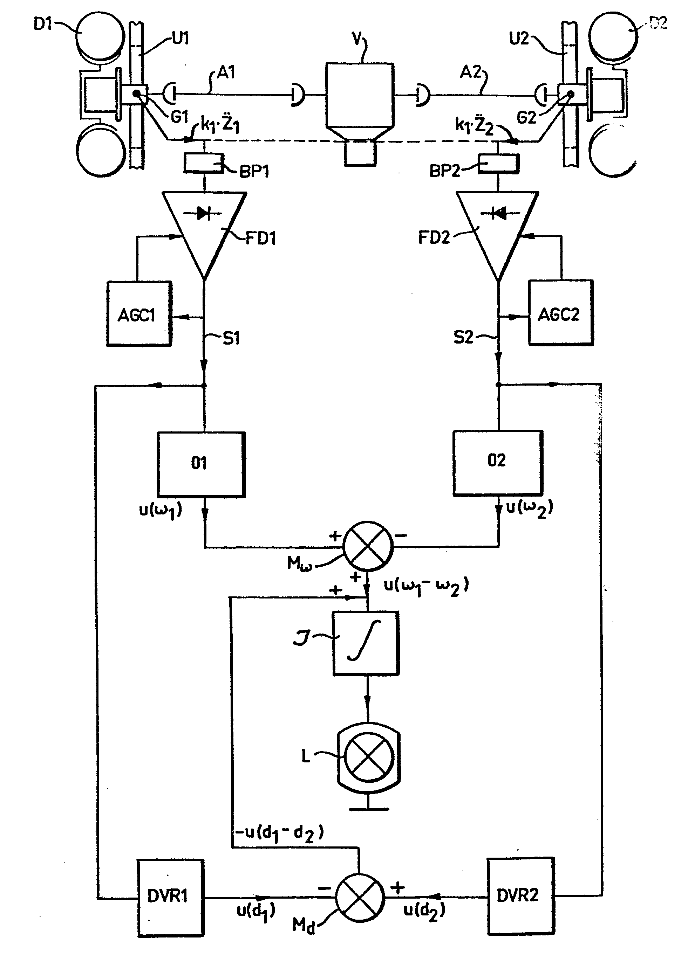

For technical reasons, the latter way (2) normally should be preferred. Therefore, this arrangement is described in the following description with reference to the accompanying drawing, in which the Figure shows in a schematic manner a practical application of the principles of the invention. The mode of operation is described with reference to the description of the system structure.

The two half-shafts A1 and A2 extend from the differential V to the respective wheel suspensions U1 and U2 on which are mounted wheels with tires D1 and, respectively, D2. On each suspension an acceleration transducer, so-called accelerometers G1 and G2, is attached as closely as possible to the vertical plane of the tire, so that the vertical acceleration of the tire can be measured without being appreciably influenced by the elasticity and oscillations of the wheel suspension. Each accelerometer G1, G2 can consist of a piezoelectric quartz element which is mounted facing upward (or downward) on the wheel suspension or on a non-rotating portion of the hub assembly and at its upper (and, respectively, lower) free end carries a metal plate. When the attachment point of the piezo element is accelerated when passing over roughs in the roadway, its movement is transferred vertically via the piezo element to said plate, the inertia of which opposes the acceleration movement and thereby momentarily compresses (and, respectively, elongates) the element. The piezo-electric effect thereof then results in an A.C. impulse, which is proportional to its compression (elongation) caused by the road bumps and can be measured, and the amplitude of which decays due to the damping factor of the tire.

The said currents from each accelerometer G1, G2 which, thus, are substantially proportional to the respective vertical accelerations of the tires D1 and D2 and here are designated by $k_1 \cdot \ddot{z}_1$ and, respectively, $k_1 \cdot \ddot{z}_2$, are in the present example first passed through a band-pass filter BP1 and, respectively, BP2 for the selection of a frequency range of the damping factor natural oscillation frequency characteristic of the tire where the characteristic is changed substantially by variations in the parameter air pressure. Thereafter the two currents are amplified and detected each in a unit FD1 and, respectively, FD2 with automatic gain control circuit AGC1 and, respectively, AGC2 for the reduction of disturbances. (The disturbances can be reduced still more by housing the piezo element and the amplifier in a common copper casing). The resulting positive half-waves are smoothed, so that signals S1 and S2 are obtained which contain respective damping factor and natural frequency components for the two tires D1, D2.

The signals S1 and S2 are fed on one side directly each to a frequency voltage transformer O1 and O2 with hold circuit.

The output signal from each transformer then is a signal corresponding to the natural oscillation frequency of the tire, viz. $u(\omega_1)$ and, respectively, $u(\omega_2)$, where the voltage u is a linear function of the angular frequency $\omega$.

The signals S1 and S2 are also fed each to a derivator DVR1 and, respectively, DVR2, the output signals $u(d_1)$ and, respectively, $u(d_2)$ of which yield the voltage u as a function of the acceleration $\ddot{z}$ of the respective tire, i.e. are a measure of the damping factor.

According to the Figure, the respective output signals are collected in pairs in analogous memories $M_\omega$ and, respectively, $M_d$, and the respective difference signals $u(\omega_1 - \omega_2)$ and $u(d_1 - d_2)$ for the two tires D1 and D2 are fed to an integrator I. When the output signal therefrom, i.e. the time integral

$$\int [u(\omega_1 - \omega_2) - u(d_1 - d_2)] dt$$

during a certain minimum period falls below the value permitted for the driving safety, the indication lamp L lights up which is located near to the driver, preferably on the instrument panel, and warns of riskful unbalance between the tire pressures.

It will be apparent that no indication of too low a pressure in both tires is obtained when these pressures are equally low. These cases, however, are uncommon and also much less dangerous than different pressures. When, however, it is desired to prevent such cases, a method involving individual indication of the air pressure in each tire can be chosen. The output signal from a transducer then is compared with a reference signal instead of with the output signal from another transducer. For this reason, considering the tire D1, also the filter BP2 is connected to the transducer G1 instead of to the transducer G2 for the tire D2 (which must be equipped in the same way as the tire D1) as indicated by dashing. The output signal $k_1 \cdot \ddot{z}_1$ of the transducer G1 now also passes through the second signal processing loop, but the band-pass filter BP2 now is dimensioned for another frequency range of the damping factor/frequency characteristic of the tire, over which range with respect to air pressure variations the response is as flat as possible.

The signal S2 hereby becomes a substantially constant reference signal, and indication is obtained in the same way as at (2), but now individually for each wheel.

The aforesaid-described system also indicates for tires with non-uniform wear, for different types of tires and for unbalanced tires. Indication further is obtained for rolling risk and also for aqua planing, by suppressing the transducer signal.

The invention is not restricted to the example described above, but different modifications within the scope of the invention can be imagined. Especially transducers (accelerometers) other than such of piezoelectric type can be imagined. Instead of carrying out analogous measuring as described above, digital measuring can be applied. When a coarser indication is deemed sufficient, it may be based only on one of the two characteristic magnitudes for the tire, viz. its damping factor or its natural oscillation frequency.

**Claims**

1. A device for indicating change of the pressure in vehicle tires (D1, D2), comprising transducers (G1 and, respectively, G2), which are located fixed on wheel suspension means, preferably adjacent the respective hub, and are continuously affected by the dynamic behaviour of the running wheel, and an electronic unit for releasing a warning signal (L) when the dynamic properties of the wheel depending on its tire pressure pass a predetermined limit, wherein the transducers are accelerometers (G1 and G2), which with their outputs are connected to the electronic unit (FD, DVR), which transforms the primary signals ($k_1 \cdot \ddot{z}_1$ and, respectively, $k_1 \cdot \ddot{z}_2$) received from the accelerometers and decreasing with dropping tire pressure to secondary signals $u(\omega_1)$ and, respectively, $u(\omega_2)$ and $u(d_1)$ and, respectively, $u(d_2)$ expressing the vertical acceleration component valid for the respective tire at a certain frequency or frequency range, characterized in that the secondary signals are compared either with each other (in $M_\omega$, $M_d$) or individually with a reference value, and the signals resulting from such comparison are passed via an integrator (1) to a warning signal device (L), the arrangement being such that a warning signal is given when the time integral of the differences falls below a preset value.

2. A device as defined in claim 1, characterised in that each accelerometer (G1, G2) consists of a piezo element, which projects vertically from a non-rotating part of the suspension (U1 and, respectively, U2) of the wheel and carries at its end a weight, which piezo element at acceleration of the attachment point in vertical direction is deformed and thereby emits an electric signal.

3. A device as defined in claim 1 or 2 for comparing tires (D1, D2) in pairs, characterized in that it comprises an amplifier and rectifier circuit (FD1 and, respectively, FD2) for amplifying and rectifying, possibly smoothing, the signal ($k_1 \cdot \ddot{z}_1$ and, respectively, $k_1 \cdot \ddot{z}_2$) coming from each accelerometer (G1, G2), a frequency voltage transformer (O1 and, respectively, O2) for transforming the output signal (S1 and, respectively, S2) of the circuit to a first voltage $u(\omega_1)$ and, respectively, $u(\omega_2)$ corresponding to the natural oscillation frequency of the tire (D1 and, respectively, D2, a derivator (DVR1 and, respectively, DVR2) for derivating the output signal (S1 and, respectively, S2) for forming a second voltage $u(d_1)$ and, respectively, $u(d_2)$ corresponding to the damping factor of the tire, a memory ($M_\omega$, $M_d$) for receiving and mutually comparing the first and the second voltages from the tire pair, and wherein the integrator (I) receives the respective voltage differences $u(\omega_1 - \omega_2)$ and, respectively, $-u(d_1 - d_2))$ and

activates the warning signal (L) at unpermissible deviations in natural oscillation frequency and/or damping factor.

4. A device as defined in claim 1 or 3 with mutual comparison between the frequency and damping factor components, characterized in that it comprises a band-pass filter (BP1 and, respectively, BP2) for restricting the output signal ($k_1 \cdot \ddot{z}_1$ and, respectively, $k_1 \cdot \ddot{z}_2$) from the accelerometer (G1 and, respectively, G2) to a frequency range of the damping factor/oscillation frequency characteristic of the tire which closely corresponds with the tire pressure.

5. A device as defined in claim 1 with comparison of the frequency and damping factor components using respective reference signals, characterized in that it comprises a band-pass filter for restricting a portion of the output signal ($k_1 \cdot \ddot{z}_1$) from the transducer (G1) to a frequency range of damping factor/oscillation frequency characteristic of the tire for forming the reference signal.

**Patentansprüche**

1. Vorrichtung zur Anzeige von Druckänderung in Fahrzeugreifen (D1, D2) bestehend aus an Radaufhängungsmitteln, vorzugsweise neben der jeweiligen Radnabe fest angeordneten Gebern (G1 bzw. G2), die kontinuierlich vom dynamischen Verhalten des laufenden Rades betätigt werden, und einer Elektronikeinheit zur Auslösung eines Warnsignales (L), wenn die von seinem Reifendruck abhängigen dynamischen Eigenschaften des Rades eine vorbestimmte Grenze überschreiten, wo die Geber aus Beschleunigern (G1 und G2) bestehen, die mit ihren Ausgängen an die Elektronikeinheit (FD, DVR) angeschlossen sind, die die von den Beschleunigern empfangenen, mit sinkendem Reifendruck abnehmenden primären Signale $k_1 \cdot \ddot{z}_1$ bzw. $k_1 \cdot \ddot{z}_2$) in sekundäre Signale $u(\omega_1)$ bzw. $u(\omega_2)$ und $u(d_1)$ bzw. $u(d_2)$ umwandelt, die die für den jeweiligen Reifen bei einer bestimmten Frequenz oder einem bestimmten Frequenzbereich geltenden vertikalen Beschleunigungskomponente ausdrücken, dadurch gekennzeichnet, daß die sekundären Signale entweder untereinander (in $M_w$, $M_d$) oder jedes einzeln mit einem Referenzwert verglichen werden, und die aus diesem Vergleich resultierenden Signale über einen Integrator (I) zu einer Warnsignalvorrichtung (L) vermittelt werden, und die Einrichtung von solcher Art ist, daß ein Warnsignal abgegeben wird, wenn das Zeitintegral der Differenzen einen voreingestellten Wert unterschreitet.

2. Vorrichtung nach Anspruch 1, dadurch gekennzeichnet, daß jeder Beschleuniger (G1, G2) aus einem von einem nichtrotierenden Teil der Radaufhängung (U1 bzw. U2) vertikal vorragenden und am Ende ein Gewicht tragenden Piezoelement besteht, das bei Beschleunigung des Befestigungspunktes in vertikaler Richtung verformt wird und dabei ein elektrisches Signal abgibt.

3. Vorrichtung nach Anspruch 1 oder 2 für paarweisen Vergleich von Reifen (D1, D2), dadurch gekennzeichnet, daß sie einen Verstärker- und Gleichrichterkreis (FD1 bzw. FD2) zur Verstärkung und Gleichrichtung, ggf. Glättung, des von jedem Beschleuniger (G1, G2) kommenden Vertikalbeschleunigungssignales $(k \cdot \check{z}_1$ bzw. $k_1 \cdot \check{z}_2)$, einen Frequenzspannungsumwandler (O1 bzw. O2) zur Umwandlung des Ausgangssignales (S1 bzw. S2) des Kreises in eine der Eigenschwingungsfrequenz des Reifens (D1 bzw. D2) entsprechende erste Spannung $u(\omega_1)$ bzw. $u(\omega_2)$, einen Derivator (DVR 1 bzw. DVR 2) zur Derivierung des Ausgangssignales (S1 bzw. S2) für Bildung einer dem Dämpfungsfaktor des Reifens (D1 bzw. D2) entsprechenden zweiten Spannung $u(d_1)$ bzw. $u(d_2)$, ein Gedächtnis $(M_\omega, M_d)$ zum Empfang und gegenseitigen Vergleich der ersten und zweiten Spannungen vom Reifenpaar, und eine Einheit einschließt, und der Integrator (I) jeweilige Spannungsunterschiede $u(\omega_1—\omega_2)$ bzw. $u(d_1—d_2)$ empfängt und bei unzulässigen Abweichungen in Eigenschwingungsfrequenz und/oder Dämpfungsfaktor das Warnsignal (L) betätigt.

4. Vorrichtung nach Anspruch 1 oder 3 mit gegenseitigem Vergleich zwischen Frequenz- und Dämpfungsfaktorkomponenten, dadurch gekennzeichnet, daß sie ein Bandpaßfilter (BP1 bzw. BP2) zur Begrenzung des Ausgangssignales $(k_1 \cdot \check{z}$ bzw. $k_1 \cdot \check{z}_2)$ vom Beschleuniger (G1 bzw. G2) auf einen Frequenzbereich der Dampfungsfaktor/Schwingungsfrequenz charakteristiken des Reifens einschließt, der dem Reifendruck nahe folgt.

5. Vorrichtung nach Anspruch 1 mit Vergleich der Frequenz- und Dämpfungsfaktorkomponenten unter Anwendung jeweiliger Referenzsignale, dadurch gekennzeichnet, daß sie ein Bandpaßfilter zur Begrenzung eines Teiles des Ausgangssignales $(k_1 \cdot \check{z}_1)$ vom Geber (G1) auf einen Frequenzbereich der Dämpfungsfaktor/Schwingungsfrequenzcharackter - istika des Reifens zur Bildung des Referenzsignales einschließt.

**Revendications**

1. Dispositif pour indiquer un changement de la pression dans les pneumatiques d'un véhicule (D1, D2) comportant des transducteurs (G1 et G2 respectivement) qui sont situés fixés sur les moyens de suspension des roues, de préférence à proximité du moyeu considéré, et sont infleucés en permanence par le comportement dynamique de la roue en rotation, et une unité électronique pour déclencher un signal d'avertissement (L) lorsque les propriétés dynamiques de la roue, dépendant de la pression de son pneumatique, dépassent une limite prédéterminée, dans lequel les transducteurs sont des accéléromètres (G1 et G2) qui, par leur sortie, sont reliés à l'unité électronique (FD, DVR), laquelle transforme les signaux primaires $(k_1 \cdot \check{z}_1$ et $k_1 \cdot \check{z}_s$ respectivement), reçus des accéléromètres et diminuant lorsque la pression du pneumatique diminue, en des signaux secondaires $[u(\omega_1)$ et $u(\omega_2)$, respectivement, et $u(d_1)$ et $u(d_2)$, respectivement] exprimant la composante d'accélération verticale valable pour le pneumatique considéré à une certaine fréquence ou gamme de fréquences, caractérisé en ce que les signaux secondaires sont comparés, soit l'un à l'autre, (dans $M_\omega$, $M_d$), soit individuellement à une valeur de référence, et les signaux résultant de cette comparaison sont transférés, par l'intermédiaire d'un intégrateur (I), à un dispositif d'avertissement (L), l'agencement étant tel qu'un signal d'avertissement est donné lorsque l'intégrale dans le temps des différences tombe en dessous d'une valeur préétablie.

2. Dispositif selon la revendication 1, caractérisé en ce que chaque accéléromètre (G1, G2) se compose d'un élément piézo-électrique qui fait verticalement saillie à partir d'une partie non rotative de la suspension (U1 et U2, respectivement) de roue, et porte à son extrémité un poids, lequel élément piézo-éléctrique, à l'accélération du point de fixation dans la direction verticale, est déformé et émet donc un signal électrique.

3. Dispositif selon la revendication 1 ou 2, pour comparer des pneumatiques par paires (D1, D2), caractérisé en ce qu'il comporte un circuit amplificateur et redresseur (FD1 et FD2, respectivement), pour amplifier et redresser, éventuellement filtrer, le signal $(k_1 \cdot \check{z}_1$ et $k_1 \cdot \check{z}_2$, respectivement) en provenance de chaque accéléromètre (G1, G2), un transformateur fréquence/tension (O1 et O2, respectivement) pour transformer le signal de sortie (S1 et S2, respectivement) du circuit en une première tension $[u(\omega_1)$ et $u(\omega_2)$, respectivement] correspondant à la fréquence d'oscillation naturelle du pneumatique (D1 et D2, respectivement), un dérivateur (DVR1 et DVR2, respectivement) pour dériver le signal de sortie (S1 et S2, respectivement) afin de former une deuxième tension $[u(d_1)$ et $u(d_2)$, respectivement] correspondant au facteur d'amortissement du pneumatique, une mémoire $(M_\omega, M_d)$ pour recevoir et comparer mutuellement les première et deuxième tensions en provenance de la paire de pneumatiques, et dans lequel l'intégrateur (I) reçoit les différences de tension respectives $[u(\omega_1—\omega_2)$ et $u(d_1—d_2)$, respectivement] et rend actif le signal d'avertissement (L) pour des déviations non permises de la fréquence d'oscillation naturelle et/ou du facteur d'amortissement.

4. Dispositif selon la revendication 1 ou 3, avec comparaison mutuelle entre composantes de fréquence et de facteur d'amortissement, caractérisé en ce qu'il comporte un filtre passe-bande (BP1 et BP2, respectivement) pour limiter le signal de sortie $(k_1 \cdot \check{z}_1$, respective-

ment) en provenance de l'accéléromètre (G1 et G2, respectivement) à une gamme de fréquences de la caractéristique fréquence d'oscillation/facteur d'amortissement du pneumatique qui correspond étroitement à la pression du pneumatique.

5. Dispositif selon la revendication 1, avec comparaison des composantes de fréquence et facteur d'amortissement utilisant des signaux de référence respectifs, caractérisé en ce qu'il comporte un filtre passe-bande pour limiter une partie du signal de sortie ($k_1 \cdot \ddot{z}_1$) en provenance du transducteur (G1) à une gamme de fréquences de la caractéristique fréquence d'amortissement/facteur d'oscillation du pneumatique, pour former le signal de référence.